# EUROPÄISCHE PATENTANMELDUNG

(11) **EP 1 182 764 A1**
(43) Veröffentlichungstag der Anmeldung: **27.02.2002**
(21) Anmeldenummer: 00810752.6
(22) Anmeldetag: 23.08.2000
(51) Int. Cl.: H02K 9/08

(54) **Kühlung für schnelllaufende elektrische Maschinen**

(71) Anmelder: ABB Industrie AG, 5401 Baden (CH)
(72) Erfinder: Jung, Michael, 79761 Waldshut-Tiengen (DE); Lebong, Markus, 5443 Niederrohrdorf (CH)
(74) Vertreter: ABB Patent Attorneys

(57) **Zusammenfassung**

Eine schnelllaufende elektrische Maschine (10) umfasst einen drehbar gelagerten Rotor (11) und einen Stator (12) mit zwei Wickelköpfen (18,19), wobei der Rotor (11), durch einen Luftspalt (14) getrennt, von einen Stator (12) konzentrisch umgeben ist. Weiterhin sind Mittel (20...,29) zum Kühlen des Rotors (11) und Stators (12) vorhanden, mittels derer ein Kühlmedium, insbesondere Kühlluft, in einem Kreislauf durch Rotor (11) und Stator (12) geschickt und die dabei vom Kühlmedium bzw. der Kühlluft aufgenommene Wärme in einem Kühler (20) wieder entzogen wird.

Bei einer solchen Maschine wird eine verbesserte und kostengünstigere Kühlung dadurch erreicht, dass das Kühlmedium bzw. die Kühlluft in zwei weitgehend voneinander unabhängigen, vorzugsweise parallelen Kühlkreisen (24 bzw. 25) für Stator (12) und Rotor (11) geführt wird.

## Beschreibung

### TECHNISCHES GEBIET

Die vorliegende Erfindung bezieht sich auf das Gebiet der elektrischen Maschinen. Sie betrifft eine schnelllaufende elektrische Maschine gemäss dem Oberbegriff des Anspruchs 1.

### STAND DER TECHNIK

Die Kühlung schnelllaufender elektrischer Maschinen, insbesondere Asynchronmotoren im Leistungsbereich von 1 bis 20 MW stellt aufgrund der hohen Umfangsgeschwindigkeiten des Rotors hohe Anforderungen an die Auswahl eines geeigneten Kühlkonzepts, wie auch an die Auslegung der Einzelkomponenten. Die abzuführende elektrische Verlustleistung erreicht in der Regel auch im Rotor Werte, welche eine interne Kühlung erfordern. Eine Wärmeabfuhr allein über den Luftspalt zwischen Rotor und Stator und über die Stirnflächen des Rotors ist zur Einhaltung der durch die jeweilige Isolationsklasse bestimmten Temperaturgrenzwerte oftmals nicht ausreichend.

Eine Sonderstellung nehmen hierbei Maschinen ein, welche mit einem unter hohem Druck stehenden Medium gekühlt werden können. Hier sind beispielsweise Motoren zum Antrieb von Pipelinekompressoren zu nennen, welche in die Erdgasleitung integriert sind und vom Fördermedium (Methan) unter einem Druck zwischen 40 und 70 bar durchströmt werden. In diesem Fall kann u.U. auf eine Kühlung des Rotorinneren verzichtet werden.

Bei Anwendungen, die eine Durchströmung des Rotors benötigen, sind zwei gegensätzliche Forderungen zu erfüllen, die insbesondere bei Rotorumfangsgeschwindigkeiten im transsonischen Bereich von entscheidender Bedeutung sind. Einerseits ist durch die erforderliche Bereitstellung eines ausreichenden Kühlmittelmassenstroms eine zuverlässige Wärmeabfuhr zu gewährleisten. Demgegenüber steht die Forderung nach einer Begrenzung der Ventilationsverluste, die proportional zum Massenstrom und zur zweiten bzw. dritten Potenz der Rotorumfangsgeschwindigkeit sind und die den Gesamtwirkungsgrad der Maschine signifikant beeinträchtigen können. Weiterhin kann das Kühlmittel bei der Durchströmung des Rotors derart erwärmt werden, dass die Austrittstemperatur Ober der zulässigen Materialtemperatur des Stators liegt. Somit können die etablierten Kühlschemata von im Drehzahlbereich zwischen 3000 und 3600 U/min operierenden Standardmaschinen, die eine serielle Durchströmung von Rotor und Stator vorsehen, nicht angewendet werden.

### DARSTELLUNG DER ERFINDUNG

Es ist daher Aufgabe der Erfindung, zur Kühlung hochdrehender elektrischer Maschinen bzw. Asynchronmaschinen ein Kühlkonzept anzugeben, welches sowohl eine effiziente Abfuhr der Wärmeleistung wie auch eine weitgehende Minimierung der Ventilationsverluste ermöglicht. Darüber hinaus sollen sich durch dieses Konzept auch erhebliche Vorteile hinsichtlich der Betriebskosten der Maschine ergeben.

Die Aufgabe wird durch die Gesamtheit der Merkmale des Anspruchs 1 gelöst. Der Kern der Erfindung besteht in der Verwendung von weitgehend voneinander unabhängigen Kühlkreisen für Rotor und Stator. Auf diese Weise wird jede der beiden Komponenten mit kaltem Kühlmedium bzw. Kühlluft versorgt. Ein mit zumeist hohen Verlusten verbundenes Einströmen bereits erwärmter Luft vom Rotor in den Stator oder umgekehrt ist somit nicht erforderlich, wodurch sich einerseits eine effiziente Kühlung beider Komponenten wie auch eine Verminderung der strömungsmechanischen Verluste gegenüber konventionellen Kühlkonzepten erzielen lässt.

Eine bevorzugte Ausgestaltung der Erfindung ist dadurch gekennzeichnet, dass zur Zirkulation des Kühlmediums bzw. der Kühlluft dem Kühler ein unabhängig von der Maschine regelbarer Zusatzventilator vor- oder nachgeschaltet ist, der die in den feststehenden Bauteilen entstehenden Druckverluste kompensiert.

Eine weitere bevorzugte Ausgestaltung der Erfindung zeichnet sich dadurch aus, dass das Kühlmedium bzw. die Kühlluft im zweiten Kühlkreis zur Kühlung des Rotors durch im Rotor untergebrachte axiale Kühlkanäle strömt, und dass zum Ausgleich der bei der Rotordurchströmung entstehenden Druckverluste am Rotor eine Beschaufelung angebracht ist Vorzugsweise ist die Beschaufelung an der dem einströmenden Kühlmedium zugewandten Stirnseite des Rotors angeordnet.

Gemäss einer weiteren bevorzugten Ausgestaltung der Erfindung sind zur Kühlung des Stators im Stator radiale Kühlschlitze vorgesehen, welche durch eine tangentiale Segmentierung in Schlitzsegmente unterteilt sind, wobei mittels einer auf dem Rücken des Stators angeordneten Sammel- und Verteileinrichtung im ersten Kühlkreis jedem Schlitzsegment kaltes Kühlmedium aus dem Kühler zugeführt und erwärmtes Kühlmedium aus dem Schlitzsegment weg und zum Kühler zurückgeführt wird, und das Kühlmedium innerhalb der Schlitzsegmente in einer Segmenthälfte von aussen nach innen strömt, unterhalb der Leiterstäbe des Stators umgelenkt wird und in einer zweiten Segmenthälfte wieder aus dem Schlitzsegment herausströmt. Insbesondere sind dabei die Kühlschlitze des Stators gegenüber dem Luftspalt abgedichtet.

Weiterhin ist es vorteilhaft, wenn dem ersten und zweiten Kühlkreis ein dritter Kühlkreis parallelgeschaltet ist, durch welchen der Wickelkopf auf der dem einströmenden Kühlmedium zugewandten Stirnseite des Stators gekühlt und der Luftspalt gespült wird.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem schematisierten Längsschnitt ein bevorzugtes Ausführungsbeispiel einer gekühlten elektrischen Maschine nach der Erfindung; und
- Fig. 2: im Querschnitt eine beispielhafte segmentierte Statorkühlung der Maschine nach Fig. 1.

### WEGE ZUR AUSFÜHRUNG DER ERFINDUNG

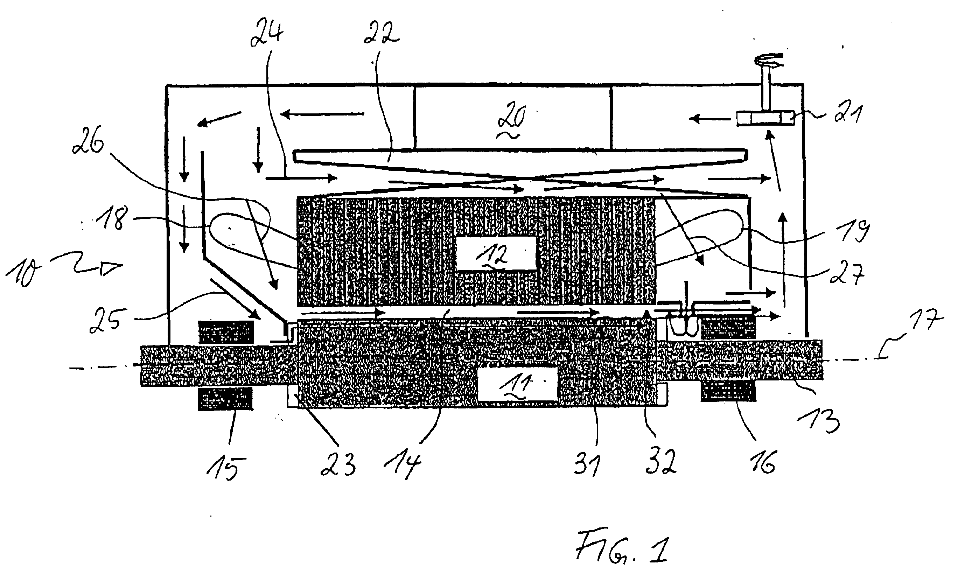

In Fig. 1 ist in einem schematisierten Längsschnitt ein bevorzugtes Ausführungsbeispiel einer schnelllaufenden, gekühlten elektrischen Maschine nach der Erfindung dargestellt. Die elektrische Maschine 10 umfasst einen Rotor 11, der mit einer Rotorwelle 13 um eine Drehachse 17 drehbar in zwei Lagern 15 und 16 gelagert ist. Der Rotor 11 ist koaxial umgeben von einem an den Stirnseiten mit Wickelköpfen 18 und 19 versehenen Stator 12, von dem in Fig. 1 der Einfachheit halber nur die obere Hälfte dargestellt ist. Rotor 11 und Stator 12 sind durch einen Luftspalt 14 voneinander getrennt. Im oberen Bereich der Maschine 10 ist ein Kühler 20 angeordnet, der von einem Kühlmedium, vorzugsweise Luft, durchströmt wird. Die Strömung der Kühlluft durch den Kühler 20 wird durch einen Zusatzventilator 21 bewirkt, der im gezeigten Beispiel in Strömungsrichtung vor dem Kühler 20 plaziert ist, aber auch hinter dem Kühler 20 angeordnet sein kann.

Ein wesentliches Merkmal des erfindungsgemässen Kühlkonzepts ist nun die Verwendung von zwei weitgehend voneinander unabhängigen Kühlkreisen 25 und 24 für den Rotor 11 und Stator 12. Auf diese Weise wird jede der beiden Komponenten mit kalter Luft versorgt Ein mit zumeist hohen Verlusten verbundenes Einströmen bereits erwärmter Luft vom Rotor 11 in den Stator 12 oder umgekehrt ist somit nicht erforderlich, wodurch sich einerseits eine effiziente Kühlung beider Komponenten wie auch eine Verminderung der strömungsmechanischen Verluste gegenüber konventionellen Kühlkonzepten erzielen lässt.

Parallel zu den Pfaden der Rotor- und der Statorluft (Kühlkreise 25 und 24) gibt es einen zusätzlichen Kühlkreis 26, Ober den der Wickelkopf 18 auf der Kaltgasseite gekühlt und der Luftspalt 14 gespült wird. Somit wird eine unkontrollierte Aufheizung der Luft im Inneren des Luftspalts 14 vermieden und die bei Maschinen mit hoher Umfangsgeschwindigkeit beträchtliche Reibleistung abgeführt. Am Eintritt oder am Austritt des Luftspalts kann zusätzlich ein (in Fig. 1 nicht dargestelltes) Drosselelement (z. B. eine Labyrinthdichtung) zur Regulierung des Luftspaltmassenstroms angebracht werden.

Weiterhin gibt es vorzugsweise einen vierten Kühlkreis 27, über den der Wickelkopf 19 auf der "heissen" Maschinenseite mit Kaltluft versorgt wird.

Das in Fig. 1 skizzierte Kühlkonzept verfügt Ober zwei Druckquellen: Der externe, unabhängig von der Maschine 10 regelbare Zusatzventilator 21, der dem Kühler 20 vor- oder nachgeschaltet ist, kompensiert die in den feststehenden Bauteilen entstehenden Druckverluste, während ein am Rotor 11 angebrachtes Lüfterrad (Beschaufelung 23) die bei der Rotordurchströmung entstehenden Druckverluste ausgleicht.

Der Eintritt des Kühlmediums in den Rotor 11 ist bei Maschinen mit hohen Umfangsgeschwindigkeiten stets eine kritische Komponente. Hohe Differenzgeschwindigkeiten zwischen dem Fluid und den rotierenden Wänden können starke Strömungsablösungen und damit hohe Druckverluste verursachen. Diese übersteigen den Druckaufbau der üblicherweise eingesetzten Frerndventilatoren (21) u.U. um ein Vielfaches, so dass der für die Kühlung erforderliche Massenstrom letztendlich nicht in den Rotor 11 eingespeist werden kann. Um einerseits die Eintrittsverluste möglichst gering zu halten und andererseits auch einen Druckaufbau zu erzeugen, der die Reibungsverluste im Rotor 11 kompensiert, wird eine radiale oder diagonale, auf der Welle 13 befestigte Beschaufelung 23 an der "kalten" Stirnseite des Rotoraktivteils angebracht. Die Durchströmung und Kühlung des Rotors 11 erfolgt durch axiale Kühlkanäle 31, die in einen radialen Ausströmspalt 32 am "heissen" Maschinenende des Rotors 11 münden.

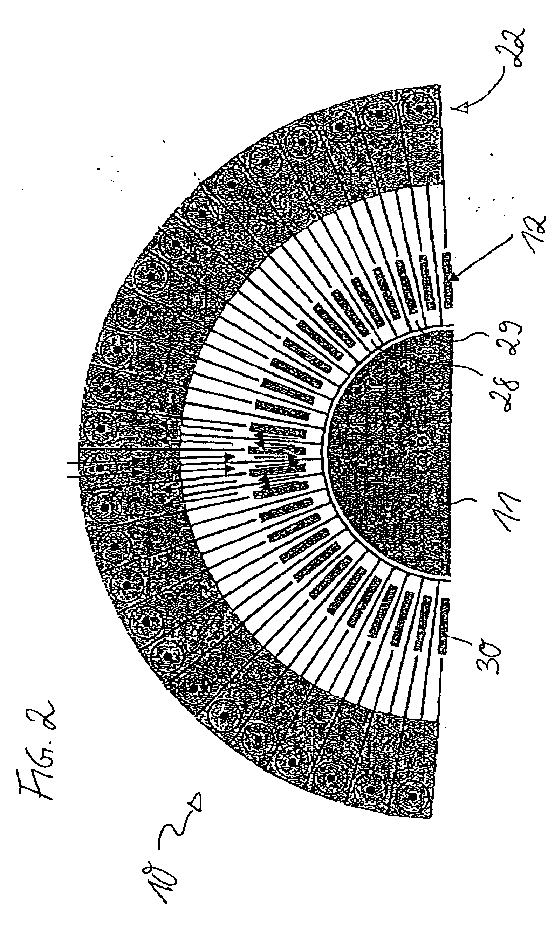

Bei der Kühlung des Stators 12 sind grundsätzlich verschiedene Konzepte einsetzbar, die jedoch als "gemeinsamen Nenner" eine Abdichtung zum Luftspalt 14 aufweisen sollten, so dass die Trennung der Rotor- und Statorkühlmittelströme (Kühlkreise 24, 25) gewährleistet ist. Das Prinzip soll hier am Beispiel einer "tangentialen" Segmentierung der radialen Kühlschlitze des Stators 12 aufgezeigt werden (Fig. 2). Diese bietet sich für ein asymmetrisches Kühlkonzept an, da sich die Luftführung sehr flexibel gestalten lässt und gut in das Gesamtkonzept integriert werden kann. Die Zu- wie auch die Abströmung der auf dem Slatorrücken angebrachten Sammler- und Verteilerkanäle mittels einer Sammel- und Verteileinrichtung 22 kann grundsätzlich auf eine beliebige Maschinenseite gelegt werden.

Weiterhin wird durch dieses Kühlschema eine sehr homogene Temperaturverteilung im Stator 12 erzeugt

Die Kühlluftzufuhr wie auch die Ableitung der erwärmten Luft erfolgt durch die bereits erwähnten und in Fig. 2 skizzierten Sammler- und Verteilerkanäle (22) auf dem Statorrücken. Die Verteiler werden von der "kalten" Maschinenseite her gespeist, während die Sammler die Luft zur "heissen" Seite ableiten (vgl. Fig. 1). Ausgehend von den Kaltluftverteilem wird je eine Hälfte eines Schlitzsegments 28, 29 von aussen nach innen durchströmt (Pfeile in Fig. 2). Unterhalb der Leiterstäbe 30 des Stators 12 erfolgt eine Umlenkung um 180 Grad sowie anschliessend die Ausströmung in die Warmluftsammler. Zu beachten ist hierbei, dass die Statorschlitze gegenüber dem Luftspalt 14 abzudichten sind. Dies kann beispielsweise durch einen zylindrischen Einsatz ("Luftspaltzylinder") realisiert werden.

Insgesamt ergibt sich mit der Erfindung ein Kühlkonzept für eine schnelllaufende elektrische Maschine, welches sowohl eine effiziente Abfuhr der Wämeleistung wie auch eine weitgehende Minimierung der Ventilationsverluste ermöglicht Darüber hinaus ergeben sich durch dieses Konzept auch erhebliche Vorteile hinsichtlich der Betriebskosten der Maschine, da die Kühlung mit Luft unter atmosphärischen Bedingungen erfolgen kann und nicht wie bei bereits auf dem Markt erhältlichen Maschinen mit Helium unter einem Druck von ca. 4 bar oder mit Methan unter 40-70 bar.

### BEZUGSZEICHENLISTE

- 10: elektrische Maschine (schnelllaufend)
- 11: Rotor
- 12: Stator
- 13: Rotorwelle
- 14: Luftspalt
- 15,16: Lager (Rotor)
- 17: Drehachse
- 18,19: Wickelkopf
- 20: Kühler
- 21: Zusatzventilator
- 22: Sammel- und Verteileinrichtung
- 23: Beschaufelung
- 24,..,27: Kühlkreis
- 28,29: Schlitzsegment
- 30: Leiterstab (Stator)
- 31: Kühlkanal (axial)
- 32: Ausströmspalt (radial)

## Patentansprüche

1. Schnelllaufende elektrische Maschine (10), umfassend einen drehbar gelagerten Rotor (11) mit zwei Wickelköpfen (18, 19), welcher Rotor (11) durch einen Luftspalt (14) getrennt von einen Stator (12) konzentrisch umgeben ist, sowie Mittel (20,..,29) zum Kühlen des Rotors (11) und Stators (12), mittels derer ein Kühlmedium, insbesondere Kühlluft, in einem Kreislauf durch den Rotor (11) und den Stator (12) geschickt und die dabei von dem Kühlmedium bzw. der Kühlluft aufgenommene Wärme in einem Kühler (20) wieder entzogen wird, **dadurch gekennzeichnet, dass** das Kühlmedium bzw. die Kühlluft in zwei weitgehend voneinander unabhängigen, vorzugsweise parallelen, ersten und zweiten Kühlkreisen (24 bzw. 25) für den Stator (12) und den Rotor (11) geführt wird.

2. Maschine nach Anspruch 1, **dadurch gekennzeichnet, dass** zur Zirkulation des Kühlmediums bzw. der Kühlluft dem Kühler ein unabhängig von der Maschine (10) regelbarer Zusatzventilator (21) vor- oder nachgeschaltet ist.

3. Maschine nach einem der Ansprüche 1 und 2, **dadurch gekennzeichnet, dass** das Kühlmedium bzw. die Kühlluft im zweiten Kühlkreis (25) zur Kühlung des Rotors (11) durch im Rotor (11) untergebrachte axiale Kühlkanäle (31) strömt, und dass zum Ausgleich der bei der Rotordurchströmung entstehenden Druckverluste am Rotor (11) eine Beschaufelung (23) angebracht ist.

4. Maschine nach Anspruch 3, **dadurch gekennzeichnet, dass** die Beschaufelung an der dem einströmenden Kühlmedium zugewandten Stirnseite des Rotors (11) angeordnet ist.

5. Maschine nach einem der Ansprüche 1 bis 4, **dadurch gekennzeichnet, dass** zur Kühlung des Stators (12) im Stator (12) radiale Kühlschlitze vorgesehen sind, welche durch eine tangentiale Segmentierung in Schlitzsegmente (28, 29) unterteilt sind, dass mittels einer auf dem Rücken des Stators (12) angeordneten Sammel- und Verteileinrichtung im ersten Kühlkreis (24) jedem Schlitzsegment (28, 29) kaltes Kühlmedium aus dem Kühler (20) zugeführt und erwärmtes Kühlmedium aus dem Schlitzsegment (28, 29) weg und zum Kühler (20) zurückgeführt wird, und dass das Kühlmedium innerhalb der Schlitzsegmente (28, 29) in einer Segmenthätfte von aussen nach innen strömt, unterhalb der Leiterstäbe (30) des Stators umgelenkt wird und in einer zweiten Segmenthälfte wieder aus dem Schlitzsegment (28, 29) herausströmt.

6. Maschine nach Anspruch 5, **dadurch gekennzeichnet, dass** die Kühlschlitze des Stators (12) gegenüber dem Luftspalt (14) abgedichtet sind.

7. Maschine nach einem der Ansprüche 1 bis 6, **dadurch gekennzeichnet, dass** dem ersten und zweiten Kühlkreis (24, 25) ein dritter Kühlkreis (26) parallelgeschaltet ist, durch welchen der Wickelkopf (18) auf der dem einströmenden Kühlmedium zugewandten Stirnseite des Stators (12) gekühlt und der Luftspalt (14) gespült wird.

8. Maschine nach Anspruch 7, **dadurch gekennzeichnet, dass** am Eintritt und/oder am Austritt des Luftspaltes (14) ein Drosselelement zur Regulierung des Massenstroms des Kühlmediums durch den Luftspalt (14) angeordnet ist.

9. Maschine nach einem der Ansprüche 1 bis 8, **dadurch gekennzeichnet, dass** ein vierter Kühlkreis (27) vorgesehen ist, durch welchen der Wickelkopf (19) auf der dem einströmenden Kühlmedium abgewändten Stimseite des Stators (12) mit Kühlmedium versorgt wird.
